# EUROPÄISCHE PATENTANMELDUNG

(11) **EP 2 824 412 A1**
(43) Veröffentlichungstag der Anmeldung: **14.01.2015**
(21) Anmeldenummer: 14173282.6
(22) Anmeldetag: 20.06.2014
(51) Int. Cl.: F41G 1/38, G02B 23/00

(54) **Elektronisch einstellbares fernoptisches Gerät**

(30) Priorität: 09.07.2013 DE 102013107236
(71) Anmelder: Carl Zeiss Sports Optics GmbH, 35576 Wetzlar (DE)
(72) Erfinder: Berlips, Carsten, 35789 Weilmünster (DE)
(74) Vertreter: Blumbach Zinngrebe

(57) **Zusammenfassung**

Der Erfindung liegt die Aufgabe zu Grunde, in einfacher Weise eine umfassende Bedienung elektronischer Zusatzfunktionen in fernoptischen Geräten zu ermöglichen. Dazu ist ein fernoptisches Gerät (1) mit mehreren Linsen (21, 22), und einem Okular (3) vorgesehen, wobei das fernoptische Gerät (1) zumindest eine handbetätigbare Verstelleinrichtung (5) zur Einstellung einer mit den Linsen (21, 22) gebildeten Optik (2) aufweist, mit welcher zumindest ein optisches Element der Optik (2) oder die Optik (2) gegenüber einer Montageeinrichtung (11) verstellbar ist. Die Verstelleinrichtung (5) ist mit zumindest einem optischen Element oder der Montageeinrichtung (11) mechanisch gekoppelt. Das fernoptische Gerät (1) weist weiterhin eine Elektronikeinheit (7) mit einem Speicher (71) auf, wobei die Elektronikeinheit (7) dazu eingerichtet ist, eine elektronische Funktion in Abhängigkeit eines im Speicher (71) abgespeicherten Einstellungsparameters auszuführen. Die Verstelleinrichtung (5) ist mit einer elektrischen Positionserfassungseinrichtung (9) gekoppelt, derart, dass eine Betätigung der Verstelleinrichtung (5) ein elektrisches Signal der elektrischen Positionserfassungseinrichtung (9) abhängig von der Stellung der Verstelleinrichtung (5) auslöst. Die Elektronikeinheit (7) ist dazu eingerichtet, einen Einstellungsparameter im Speicher (71) abhängig vom elektrischen Signal der Positionserfassungseinrichtung (9) abzuspeichern oder zu ändern.

## Beschreibung

Die Erfindung betrifft allgemein fernoptische Geräte, wie Ferngläser, Spektive oder Zielfernrohre. Im Speziellen betrifft die Erfindung elektronisch einstellbare fernoptische Geräte.

Die DE 40 03 976 A1 beschreibt eine elektronisch gesteuerte Kamera mit Varioobjektiv, das durch Bedienen eines Betätigungselements in einer Normalrichtung zu einer Tele-Stellung und durch Bedienen des Betätigungselements in entgegengesetzter Richtung zu einer Weitwinkelstellung bewegbar ist. Es ist eine Vorrichtung zum Ändern der Aufnahmeart mittels einer Steuervorrichtung und eine Anzeigevorrichtung zum Darstellen der Aufnahmeart vorgesehen. Die Kamera umfasst weiterhin eine Vorrichtung zum manuellen Ändern der Ablaufzeit des Kameraverschlusses und/oder der Intervallzeit eines Intervall-Aufnahmebetriebs bei Einstellung der Kamera auf manuelle Verschlußeinstellung bzw. Intervall-Aufnahmebetrieb und bei gleichzeitigem Bedienen des Betätigungselements und der Vorrichtung zum Ändern der Aufnahmeart. Die Einstellung des optischen Systems der Kamera, Zoom und Scharfstellung erfolgt motorgesteuert. Alle Bedienelemente sind als elektrische Schaltelemente ausgeführt.

Die DE 19515531 A1 beschreibt eine optronische Visiereinrichtung für Handfeuerwaffen. Diese ist mit einem Optikteil ausgerüstet, der mehrere Linsengruppen und einen hochauflösenden CCD-Baustein aufweist, mit deren Hilfe ein Videosignal vom Bild des Zielgebietes erzeugt werden kann. Weiterhin ist die Visiereinrichtung mit einem Elektronikteil versehen, der eine elektronische Bildverarbeitungseinrichtung mit Mikroprozessor, Speicher, Generatoren für virtuelle Symbole und Komponenten zur Verarbeitung externer Signale, zur Verarbeitung des Videosignals aus dem Optikteil, und zur Erzeugung elektrischer Bildsignale; und eine Displayeinrichtung an einem Okular umfasst. Um die Anwendung und Bedienbarkeit einer solchen optronischen Visiereinrichtung zu erleichtern und zu verbessern, kann der Optikteil für eine Zoom-Funktion und für eine Autofokus-Funktion ausgelegt sein. Dem Sichtfeld des Okulars ist wenigstens ein Sensor eines optischen Schalters zugeordnet, der schaltbar ist durch eine Veränderung der Blickrichtung eines Auges, mit welchem ein Benutzer in das Okular blickt. Über die Blickrichtung des Auges wird die Zoom-Funktion aktiviert.

Die AT 506 437 B1 beschreibt ein binokulares Fernglas mit einer Fokussiereinrichtung zum Fokussieren zumindest eines ersten visuellen Strahlenganges und mit einem Laser-Entfernungsmesser. Zur Beobachtung und Messung der Entfernung eines entfernten Objekts wird das Beobachtungsgerät zunächst auf das Objekt gerichtet und dieses damit anvisiert. Das Anvisieren des Objekts wird durch Einblenden einer Zielmarke unterstützt. Das Einblenden der Zielmarke kann durch Betätigung eines dafür vorgesehenen Schalters ausgelöst werden.

In der DE 42 22 417 wird ein Fernglas mit einer Einrichtung zur wahlweisen Beobachtung von Zusatzinformationen beschrieben, wobei ein Informationsträger oder eine Informationsumlenkeinrichtung im Strahlengang angeordnet sind. Die Informationsumlenkeinrichtung ist in den Strahlengang einschiebbar. Die Bewegung der Informationsumlenkeinrichtung in den Strahlengang hinein erfolgt durch einen Bedienungsdruckknopf, der über eine Übertragungsschwenkstange auf die Informationsumlenkeinrichtung wirkt.

Aus der DE 101 15 854 A1 ist ein Fernglas mit Abbildungsfunktion bekannt, welches zusätzlich zu einem Paar optischer Betrachtungssysteme, welche Objektive und Okulare enthalten, weiterhin eine Abbildungseinrichtung mit einem optischen Abbildungssystem aufweist, um ein Gesichtsfeld eines Feldwinkels so zu aktualisieren, dass es im Wesentlichen einem realen Feld eines Bildes gleicht, welches durch die optischen Binokularsysteme betrachtet wird. Eine photoelektrische Wandlereinheit wandelt ein von dem optischen Abbildungssystem erhaltenes Bild in ein elektrisches Signal um. Das optische Betrachtungssystem und das optische Abbildungssystem haben ihre eigenen, voneinander verschiedenen optischen Achsen.

Das Fernglas weist Bedienschalter auf, die an eine Steuereinheit angeschlossen sind. Das Betätigen dieser Schalter führt zu einer Eingabe in die Steuereinheit.

Die Steuereinheit steuert zum Beispiel die Funktion als Objektivtreiber-Steuerschaltung und das Akzeptieren von Eingaben seitens der Bedienschalter.

In der DE 102 45 395 A1 wird ein Fernglas mit Abbildungs-, beziehungsweise Fotografierfunktion offenbart, bei welcher jeder Tubus einen Strahlengang durch ein Objektiv und ein Okular aufweist. Es ist eine Einrichtung zur Auskopplung eines Teillichtstrahles und ein Modul mit einem Bildsensor zur Umwandlung von Bildern in digitale Daten vorgesehen, welches derart an einem Gehäuse des Tubus, welcher die Einrichtung zur Auskopplung des Teillichtstrahles enthält, angebracht ist, dass eine Auskopplung eines optischen Signals auf dem Bildsensor möglich ist. Damit können mit einer autarken Digitalkamera mit einer Schnittstelle für einen zusätzlichen externen Bildsensor Bilder durch das Fernglas aufgenommen werden. Die mechanische Verschiebung der optischen Elemente des Fernglases vor dem Bildsensor erfolgt synchron mit der Fokussierung des Fernglases durch den Benutzer. Ein Fernglas mit Fotografierfunktion ist weiterhin beispielsweise auch aus der DE 103 38 668 A1 bekannt. Die Fokussierung der Fotografieroptik erfolgt manuell.

Die DE 103 53 158 A1 beschreibt ebenfalls ein Fernglas mit Digitalkamera. Die Bedienung der elektronischen Funktionen erfolgt über Bedienelemente am Hauptkörper des Fernglases, nämlich mittels eines Auslöseschalters, einer Menütaste, einer Aufzeichnungstaste, vier Cursortasten, sowie einer OK- oder Bestätigungstaste.

Bei dem in der DE 103 59 755 A1 beschriebenen Fernglas wird ein Bildaufnahmesensor in einen der Strahlengänge des Binokulars über einen mechanischen oder elektrischen Antrieb eingebracht, wobei der Antrieb mit einem Auslöser gekoppelt ist.

Die DE 103 174 83 A1 beschreibt ein Fernglas oder Fernrohr mit einem optischen System mit mindestens zwei optischen Komponenten, deren Abstand relativ zueinander zur Einstellung der Gegenstandsweite des optischen Systems verstellbar ist, sowie mit einer mit mindestens einer der beiden optischen Komponenten gekoppelten EinstellEinrichtung zur Verstellung des Abstandes zwischen den beiden optischen Komponenten. Eine Erfassungs-Einrichtung zur Erfassung der relativen Lage der optischen Komponenten zueinander, steht zur Umrechnung der von der Erfassungs-Einrichtung erhaltenen Lagedaten in die Gegenstandsweite des optischen Systems mit einem Prozessor in Signalverbindung. Weiterhin ist eine mit dem Prozessor in Signalverbindung stehende Ausgabe-Einrichtung zur ablesbaren Darstellung der umgerechneten Gegenstandsweite vorgesehen. Die Erfassungs-Einrichtung umfasst beispielsweise einen Potentiometer-Abgriff.

Ein Fernglas mit elektronischen und optoelektronischen Zusatzfunktionen, wie Entfernungsmesser, elektronischer Richtungsmesser, Neigungsmesser, Höhenmesser, Temperaturmesser, Bildaufnahme-Chip, GPS-Empfänger, kabelgebundene oder kabellose Schnittstelle zum Datenaustausch zwischen Fernglas und Zusatzgeräten ist weiterhin auch der DE 10 2004 054 182 A1 bekannt.

In fernoptischen Geräten wie einem Zielfernrohr, einem Fernglas, einem Spektiv usw. wird, wie anhand des oben genannten Standes der Technik ersichtlich, immer mehr Elektronik integriert. Die Funktion der Elektronik erfordert gegebenenfalls die Auswahl von verschiedenen elektronischen Einstellungen. Für eine sinnvolle Bedienung sind dafür immer mehr Tasten, Schalter oder Drehgeber erforderlich.

Jeder zusätzliche Schalter am Gerät benötigt Platz, verursacht zusätzliche Kosten, muss abgedichtet werden und erleichtert nicht unbedingt die Bedienung. Auf einige der möglichen Einstellungen wird dabei bei der Benutzung nicht ständig zugegriffen.

Der Erfindung liegt daher die Aufgabe zugrunde, in einfacher Weise eine umfassende Bedienung elektronischer Zusatzfunktionen in fernoptischen Geräten, insbesondere in handgehaltenen fernoptischen Geräten zu ermöglichen, ohne dafür eine Vielzahl von elektrischen Tastern oder anderen elektronischen Bedienelementen vorsehen zu müssen.

Demgemäß sieht die Erfindung ein fernoptisches Gerät mit einer Optik mit mehreren Linsen und einem Okular vor, mit welchem ein Objekt durch das Okular betrachtbar ist, wobei das fernoptische Gerät zumindest eine handbetätigbare Verstelleinrichtung zur Einstellung der Optik aufweist, mit welcher zumindest ein optisches Element der Optik einschließlich der Linsen oder die Optik gegenüber einer Montageeinrichtung verstellbar ist. Die Verstelleinrichtung ist dazu mit zumindest einem optischen Element oder einer Montageeinrichtung mechanisch gekoppelt. Unter einer Optik oder einem optischen System wird allgemein die Gesamtheit der optischen Elemente des fernoptischen Geräts verstanden.

Das fernoptische Gerät weist weiterhin eine Elektronikeinheit mit einem Speicher auf. Die Elektronikeinheit ist dazu eingerichtet, eine elektronische Funktion in Abhängigkeit eines im Speicher abgespeicherten Einstellungsparameters auszuführen. Die Verstelleinrichtung ist mit einer elektrischen Positionserfassungseinrichtung derart gekoppelt, dass eine Betätigung der Verstelleinrichtung ein elektrisches Signal der elektrischen Positionserfassungseinrichtung abhängig von der Stellung der Verstelleinrichtung auslöst. Die Elektronikeinheit ist weiterhin dazu eingerichtet, einen Einstellungsparameter im Speicher abhängig vom elektrischen Signal der Positionserfassungseinrichtung abzuspeichern oder zu ändern. Damit wird bis zum nächsten Abspeichern des Einstellungsparameters auch die elektronische Funktion geändert. Ändern der Funktion kann dabei auch ein Aktivieren oder Desaktivieren bedeuten.

Es werden also die mechanischen Einstelleinrichtungen zur Einstellung der Optik genutzt, um auch elektronische Einstellungen zu ändern. Insbesondere handelt es sich um solche Einstellungen, die in der Elektronik des Geräts abgespeichert und damit dauerhaft bis zur nächsten Änderung eingestellt werden. Mit anderen Worten liegt der Erfindung also die Idee zugrunde, in fernoptische Geräten schon vorhandene mechanische-optische Einstellmöglichkeiten zu benutzen, um zusätzlich elektronische Einstellungen vorzunehmen.

Als handbetätigbare Verstelleinrichtung kommt insbesondere ein Fokusrad, eine Dioptrienverstellung, eine Parallaxenausgleich-Einrichtung, eine Höhen/Seitenturm-Einstellung, beziehungsweise allgemeiner eine Verstellturm-Einstelleinrichtung, eine Knickbrücke, eine Blendeneinstelleinrichtung, oder eine Zoom-Einstelleinrichtung in Frage.

Im Allgemeinen ist es nicht günstig, wenn die elektrische Positionserfassungseinrichtung dauerhaft zur Einstellung eines Parameters aktiviert ist. Gemäß einer Weiterbildung der Erfindung ist daher vorgesehen, dass die Elektronikeinheit dazu eingerichtet ist, unter Ansprechen auf ein elektrisches Aktivierungssignal in einen Einstellmodus zu schalten. Erst in diesem Einstellmodus ist dann die Elektronikeinheit dahingehend aktiviert, ein elektrisches Signal der Positionserfassungseinrichtung zu erfassen. Gemäß einer Weiterbildung dieser Ausführungsform wird das elektrische Signal durch eine vom Benutzer auslösbare Aktivierungseinrichtung erzeugt. Eine solche Aktivierungseinrichtung kann beispielsweise einhandbetätigbarer Schalter am fernoptischen Gerät sein. Der handbetätigbare Schalter kann auch als Taster ausgebildet sein. Neben einem Schalter oder Taster sind alternativ oder zusätzlich auch andere durch den Benutzer auslösbare Aktivierungseinrichtungen möglich. Eine solche Aktivierungseinrichtung kann beispielsweise ein Näherungssensor sein, welcher das Aktivierungssignal durch Annäherung eines Körperteils, wie etwa eines Fingers auslöst. Ebenfalls möglich ist ein Lage- oder Bewegungssensor. Im Falle eines Lagesensors wird das Aktivierungssignal ausgelöst, indem das fernoptische Gerät in eine bestimmte Orientierung gebracht wird. Beispielsweise kann das Aktivierungssignal ausgelöst werden, indem das fernoptische Gerät auf den Kopf gestellt, beziehungsweise auf dem Objektiv abgestellt wird. Ein Bewegungssensor kann insbesondere als Beschleunigungssensor ausgebildet sein. Das Aktivierungssignal wird dann durch Ausführen einer bestimmten Bewegung, etwa beispielsweise durch Schütteln des fernoptischen Geräts ausgelöst.

Gemäß noch einer Weiterbildung kann auch ein handbetätigbarer Schalter vorgesehen sein, mit welchem die Einstellung des Einstellungsparameters bestätigt wird. Dieser Schalter kann auch der gleiche handbetägigbare Schalter wie der vorgenannte Schalter zur Aktivierung des Einstellmodus sein. Beispielsweise kann die Elektronikeinheit dann dazu ausgebildet sein, unter Ansprechen auf die Betätigung dieses Schalters den Einstellungsparameter in den Speicher zu schreiben.

Gemäß einer Ausführungsform der Erfindung wird durch das elektrische Signal, vorzugsweise durch Betätigung eines oder mehrerer Schalter am Gerät von der Elektronikeinheit in einen Auswahl- oder Menümodus geschaltet, wobei die Elektronikeinheit dazu eingerichtet ist, unter Ansprechen auf ein oder mehrere weitere elektrische Aktivierungssignale in Kombination mit einem oder mehreren elektrischen Signalen der Positionserfassungseinrichtung Parameter verschiedener elektronischer Funktionen abzuspeichern.

Die weiteren Aktivierungssignale können dabei auch von der Positionserfassungseinrichtung erzeugt werden. Werden die weiteren Aktivierungssignale durch einen oder mehrere Schalter am fernoptischen Gerät erzeugt, wechselt die Elektronikeinheit also durch Betätigung der Schalter zwischen verschiedenen Auswahl- oder Menüpunkten. Im Falle, dass die Aktivierungssignale durch die Positionserfassungseinrichtung erzeugt werden, kann demgemäß durch Betätigung der Verstelleinrichtung zwischen den Auswahl- oder Menüpunkten gewechselt werden. Selbstverständlich sind beide Ausführungsformen auch miteinander kombinierbar.

Um den oder die über die Verstelleinrichtung manipulierbaren Parameter einfach einstellen zu können, ist es weiterhin günstig, wenn der Bediener des fernoptischen Geräts von der entsprechend ausgebildeten Elektronikeinheit eine Rückmeldung über die Änderung der elektronischen Einstellungen erhält. Diese Rückmeldung erfolgt mittels einer Signalisierungseinrichtung akustisch und/oder optisch. Die Signalisierungseinrichtung ist an die Elektronikeinheit angeschlossen oder bildet einen Bestandteil derselben. Die Elektronikeinheit ist entsprechend dazu ausgebildet, mittels der Signalisierungseinrichtung eine Änderung des Einstellungsparameters und/oder eine Änderung der elektronischen Einstellungen zu signalisieren.

Besonders bevorzugt umfasst die Signalisierungseinrichtung eine optische Anzeige, welche durch zumindest einen Strahlengang des fernoptischen Geräts hindurch sichtbar ist. Derartige Anzeigen oder Displays sind oftmals bei Geräten mit elektronischen Zusatzfunktionen, wie beispielsweise bei einer integrierten Entfernungsmessungseinrichtung vorgesehen und können für den Zweck der Erfindung vorteilhaft verwendet werden. Bei einem Binokular als fernoptischem Gerät kann die Anzeige entweder durch den Strahlengang eines Tubus, oder auch durch die Strahlengänge beider Tuben sichtbar sein.

Wenn ein Lage- und/oder Positionserfassungssensor eingesetzt wird, kann in besonders vorteilhafter Weise auch eine Menüführung bewegungsgesteuert durchgeführt werden. So kann in Verbindung mit einer elektronisch gesteuerten optischen Anzeige, die für den Betrachter bei der Durchsicht durch das fernoptische Gerät sichtbar ist, ein Menüpunkt einer in der Anzeige sichtbare Menü- oder Auswahlstruktur zur Einstellung einer elektronischen Funktion des fernoptischen Geräts durch Bewegung des fernoptischen Geräts angewählt werden. Das Bestätigen einer Auswahl kann wieder mit einem Schalter oder Taster als Bestätigungs- oder Aktivierungsschalter erfolgen. Eine derartige Menü- oder Bedienungsführung kann auch unabhängig von einer Einstellung eines Einstellparameters mittels einer Verstelleinrichtung, die mit zumindest einem optischen Element oder der Montageeinrichtung mechanisch gekoppelt ist, erfolgen. Gemäß einem weiteren Aspekt der Erfindung ist daher ein fernoptisches Gerät mit einer Optik mit mehreren Linsen und einem Okular vorgesehen, wobei das fernoptische Gerät weiterhin eine Elektronikeinheit mit einem Speicher aufweist, wobei die Elektronikeinheit dazu eingerichtet ist, eine elektronische Funktion in Abhängigkeit eines im Speicher abgespeicherten Einstellungsparameters auszuführen, und wobei das fernoptische Gerät eine von der Elektronikeinheit gesteuerte optische Anzeige, beziehungsweise ein Display umfasst, welche durch zumindest einen Strahlengang des fernoptischen Geräts hindurch sichtbar ist, und wobei zumindest ein Lagesensor und/oder Bewegungssensor vorgesehen sind, wobei die Elektronikeinheit eingerichtet ist, die optische Anzeige unter Ansprechen auf Signale des Lagesensors und/oder Bewegungssensors derart zu steuern, dass bei einer Lage- oder Bewegungsänderung eine Auswahl oder Aktivierung eines Auswahlfelds eines von der optischen Anzeige dargestellten Menüs geändert wird.

Besonders geeignet ist die Erfindung für die Änderung von Grundeinstellungen. Unter Grundeinstellungen sind solche Einstellungen zu verstehen, die nicht fortlaufend beim Betrieb des Geräts durch den Benutzer angepasst werden. Die eingestellten Werte können daher dauerhaft im Speicher abgespeichert werden. Fortlaufende Anpassungen ergeben sich demgegenüber beispielsweise bei der Fokussierung.

Als Beispiel für eine solche Grundeinstellung ist bei einem fernoptischen Gerät mit Entfernungsmessung beispielsweise die Einstellung der Entfernungsangabe wahlweise in Fuß oder Yard oder Meter.

Allgemein kann die Elektronikeinheit dazu eingerichtet sein, zumindest einen der folgenden Einstellungsparameter unter Ansprechen auf eine Betätigung der Verstelleinrichtung zu ändern:
- generelle Standardeinstellungen,
- eine Defaulthelligkeit einer optischen Anzeige,
- eine maximale Helligkeit einer optischen Anzeige,
- eine Umschaltung von Einheiten, beispielsweise Entfernungseinheiten, etwa von Meter in Fuß oder Yards, oder von Winkeleinheiten,
- eine Einstellung oder Auswahl einer Ballistikkurve,
- eine Zeitangabe, wie beispielsweise Uhrzeit und/oder Datum,
- eine minimale Helligkeit einer optischen Anzeige,
- Helligkeitsstufen einer optischen Anzeige,
- Funkübertragungseinstellungen, insbesondere Einstellungen zur Funkübertragung und/oder zum Funkempfang von Daten.

Als generelle Standardeinstellungen werden dabei insbesondere vom Gerätetyp abhängige mechanische Einstellungen verstanden, die elektrisch, vorzugsweise motorisch verstellbar sind. Solche Einstellungen können sein:
- eine Standardeinstellung der Fokussierung, insbesondere eine Einstellung der Fokussierung auf unendliche Objektweite,
- eine Einstellung eines Dioptrienausgleichs auf null,
- eine Einstellung von Höhe und/oder Seite bei einer Abseheneinrichtung auf null.

Insbesondere bei komplexeren Einstellungen oder der Auswahl von Menüpunkten bietet es sich an, Einstellungen mittels zweier Verstelleinrichtungen vorzunehmen. Beispielsweise kann auf diese Weise mittels einer ersten Verstelleinrichtung ein Menüpunkt, beziehungsweise eine Auswahl einer bestimmten elektronischen Funktion und durch Betätigung einer zweiten Verstelleinrichtung dann der gewünschte Parameter dieser Funktion ausgewählt werden. Die Auswahl eines Parameters erfolgt hier also unter Verwendung beider Verstelleinrichtungen zur Einstellung der Optik. In Weiterbildung der Erfindung ist daher eine zweite handbetätigbare Verstelleinrichtung zur Einstellung der Optik des fernoptischen Geräts vorgesehen, wobei die zweite Verstelleinrichtung mit einer zweiten elektrischen Positionserfassungseinrichtung derart gekoppelt ist, dass eine Betätigung der zweiten Verstelleinrichtung ein elektrisches Signal der zweiten elektrischen Positionserfassungseinrichtung abhängig von der Stellung der zweiten Verstelleinrichtung auslöst. Die Elektronikeinheit ist hier dazu eingerichtet, einen Einstellungsparameter im Speicher abhängig von den elektrischen Signalen beider Positionserfassungseinrichtungen abzuspeichern oder zu ändern.

Die Positionserfassungseinrichtung kann im einfachsten Fall einen Schalter umfassen. Ein Schalter mit zwei positionsabhängigen Schaltzuständen kann beispielsweise dazu genutzt werden, eine Auswahl aus zwei möglichen Parameterwerten zu treffen. Als Beispiel sei die oben bereits genannte Umstellung von Meter auf Fuß genannt. Es kann auch ein Schleifkontaktschalter, insbesondere mit mehreren Schaltkontaktflächen verwendet werden, um eine komplexere Auswahl zu treffen. Weitere Möglichkeiten sind Potentiometer und Inkrementalgeber.

Möglich ist auch ein optischer, magnetischer oder kapazitiver Sensor. Mit letzteren Sensoren kann in einfacher Weise eine stufenlose oder zumindest sehr feinstufige Auswahl und/oder Einstellung des Einstellungsparameters vorgenommen werden.

Die Erfindung wird nachfolgend anhand von Ausführungsbeispielen und unter Bezugnahme auf die beigeschlossenen Zeichnungen näher erläutert. Dabei verweisen gleiche Bezugszeichen auf gleiche oder entsprechende Elemente. Es zeigen:
Fig. 1 ein Binokular,
Fig. 2 eine Ansicht eines Zielfernrohrs,
Fig. 3 eine schematische Schnittansicht des in Fig. 2 gezeigten Zielfernrohrs,
Fig. 4 eine schematische Darstellung von Komponenten eines erfindungsgemäßen fernoptischen Geräts,
Fig. 5 eine Ausführungsform einer Positionserfassungseinrichtung in Form eines Schalters mit mehreren Schaltflächen,
Fig. 6 ein fernoptisches Gerät 1 in Aufsicht auf das Okular 3,
Fig. 7 ein Binokular mit zwei handbetätigbaren Verstelleinrichtungen,
Fig. 8 ein Spektiv mit einer Verstelleinrichtung an einer Montageeinrichtung.

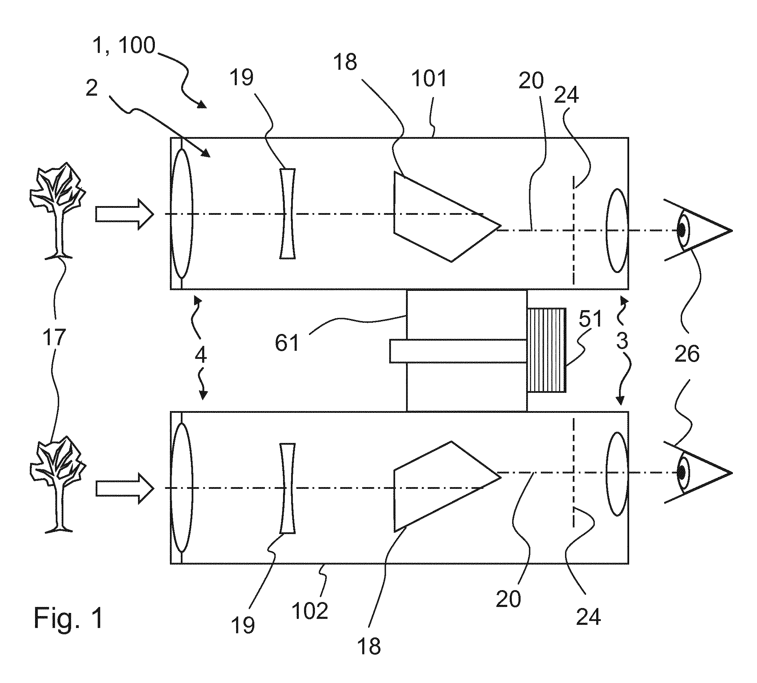

Die Fig. 1, Fig. 2 und Fig. 3 zeigen als Beispiel zwei fernoptische Geräte 1, in welche die Erfindung implementiert werden kann. Fig. 1 zeigt ein binokulares Fernglas, oder Binokular 100.

Ein binokulares Fernglas 100 besteht aus zwei parallel zueinander angeordneten Tuben 101, 102, die jeweils ein optisches System, beziehungsweise eine Optik 2 enthalten.

Das optische System oder die Optik bezeichnet die Gesamtheit der optischen Elemente des jeweiligen Tubis 101, 102 und besteht im Beispiel der Fig. 1 aus mindestens einem Objektiv 4, einer Aperturblende, einem Prismensystem 18 und einem Okular 3. Durch das Objektiv 4 und durch das Okular 3 wird jeweils eine optische Achse 20 festgelegt.

Das Objektiv 4 kann aus mehreren einzelnen Linsen oder Kittgliedern bestehen.

Zum Zwecke einer Fokussierung eines durch das binokulare Fernglas 100 betrachteten Objekts 17 kann entweder das Okular 3 axial verschoben werden, oder das komplette Objektiv kann axial verschoben werden, oder eine Linsengruppe, die Bestandteil des Objektivs ist, kann axial verschoben werden. Diese Linsengruppe ist in der Regel zwischen Objektiv und Prismensystem 18 angeordnet und kann Fokussierlinse 19 genannt werden. Zum Fokussieren kann ein Drehknopf oder Verstellrad 51 auf einer Mittelachse angeordnet sein, mit dem die Fokussierlinsen 19 gemeinsam axial verschoben werden können.

Das Objektiv 4 kann ein reales, relativ zum betrachteten Objekt 17 auf dem Kopf stehendes Bild in einer dem Objektiv 4 zugeordneten Bildebene erzeugen. Zum Zwecke der Bildaufrichtung kann das Prismensystem 18 nach Abbe-König, Schmidt-Pechan, Uppendahl, Porro oder einer anderen Prismensystem-Variante aufgebaut sein. Durch das Prismensystem 18 wird das auf dem Kopf stehende Bild wieder aufgerichtet und in einer neuen Bildebene, der Zwischenbildebene 24 abgebildet.

In der Zwischenbildebene 24 kann sich eine das Sehfeld scharf begrenzende Feldblende befinden.

Das Okular 3 kann dazu benutzt werden, das Bild der Zwischenbildebene 24 in eine beliebige Entfernung, z.B. ins Unendliche oder in einem Meter scheinbare Entfernung, abzubilden.

Eine Strahlrichtung kann durch die Reihenfolge Objekt 17-Objektiv 4 - Prismensystem 18 - Okular 3 - Auge 26 definiert werden. Die optische Achse des Objektivs kann durch einen *Strahlversatz* aufgrund des Prismensystems zur optischen Achse des Okulars einen lateralen Versatz aufweisen.

Die Tuben 101, 102 sind entweder über mindestens eine zweiteilige Brücke oder Knickbrücke 61 mit der Mittelachse miteinander verbunden, oder sind fest zueinander in einem gemeinsamen Gehäuse angeordnet.

Der Augenabstand eines Benutzers kann bei Vorhandensein der mindestens einen zweiteiligen Brücke oder Knickbrücke 61 durch eine Knickung der Brücke berücksichtigt werden. Im Falle eines gemeinsamen Gehäuses wird der Augenabstand des Benutzers z.B. mittels rhombischer Prismen, die in Strahlrichtung hinter dem Prismensystem angeordnet sind, eingestellt, wobei die Okulare dann mit den rhombischen Prismen mitschwenken.

Die Aperturblende kann entweder durch eine Fassung eines optischen Elements gebildet sein oder durch eine separate Blende definiert sein. Sie kann durch das in Strahlrichtung nachfolgende restliche optische System in eine Ebene abgebildet werden, die in Strahlrichtung hinter dem Okular liegt und typischerweise 5 bis 25 mm Abstand zu diesem hat. Diese Ebene kann *Ebene der Austrittspupille* genannt werden. Eine Fehlsichtigkeit des Benutzers kann mittels eines Dioptrienausgleichs berücksichtigt werden. Dazu können z.B. die relativen axialen Positionen der Fokussierlinsen 19 der beiden Tuben 101, 102 zueinander vom Benutzer verstellbar sein. Eine andere Möglichkeit besteht darin, die relativen axialen Positionen der Okulare 3 zueinander verändern zu können.

Zum Schutz des Benutzers vor seitlichen einfallendem Licht können an der Okularen 3 ausziehbare, ausdrehbare oder umklappbare Augenmuscheln vorgesehen sein.

Ein binokulares Fernglas 100 kann darüber hinaus weitere optische Komponenten enthalten, die z.B. einer Bildstabilisierung, einer Strahlein- oder -auskopplung oder fotografischen Zwecken dienen. Ebenso können elektronische Komponenten, Bedienelemente oder Energiespeicher vorhanden sein, die für die genannten Zwecke nötig sind. Mittels der Erfindung werden nun Funktionen der elektronischen Komponenten über vorhandene mechanische Bedienelemente, wie dem im Beispiel der Fig. 1 gezeigten Verstellrad 51 konfiguriert.

Meistens seitlich am binokularen Fernglas 100 können sich Haltevorrichtungen befinden, an denen z.B. ein Gurt zum Tragen befestigt werden kann.

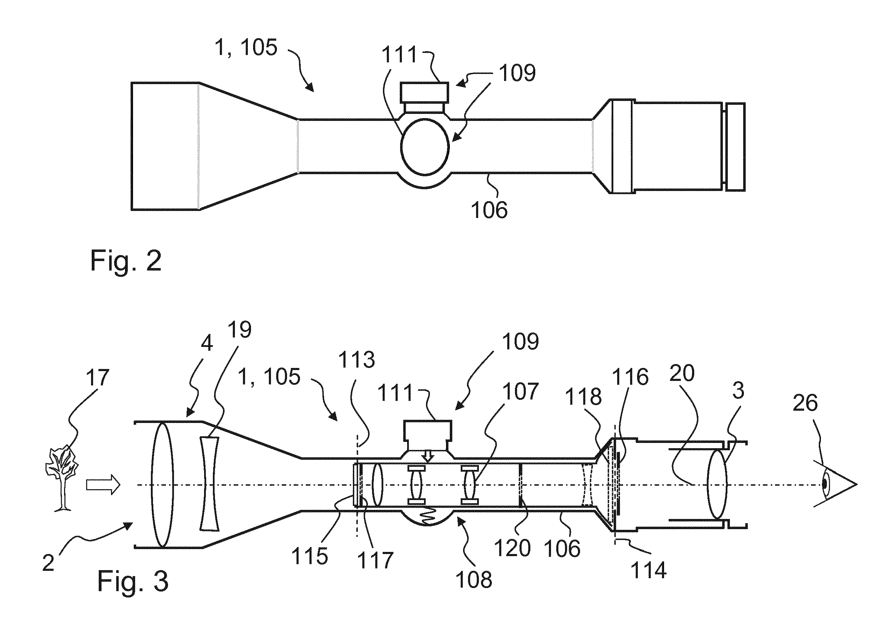

Fig. 2 zeigt eine Ansicht eines Zielfernrohrs 105 als weiteres Beispiel eines fernoptischen Geräts 1. In Fig. 3 ist eine schematische Schnittansicht des in Fig. 2 gezeigten Zielfernrohrs 105 dargestellt.

Ein Zielfernrohr 105 besteht im Allgemeinen aus einem Rohr 106 oder rohrförmigem Gehäuse, das stückweise verschiedene Durchmesser aufweist und ein optisches System oder eine Optik 2 enthält.

In einem vorderen, meistens verdickten Bereich kann sich ein Objektiv 4 befinden. In einem mittleren Bereich, der oft Mittelrohr genannt wird, können sich verstellbare optische Elemente 107 befinden. Zusätzlich befinden sich dort äußere Verstelltürme 109, die ein Drehelement 111 aufweisen, mit dem sich optische Eigenschaften des optischen Systems verändern lassen. In einem hinteren, meist verdickten Bereich kann sich ein Okular 3 befinden. Das optische System, beziehungsweise die Optik 2 umfasst ale optische Elemente mindestens ein Objektiv 4, ein Linsenumkehrsystem 108, ein Absehen und einem Okular 3. Durch das optische System wird eine optische Achse 20 festgelegt.

Das Objektiv 4 kann aus mehreren einzelnen Linsen oder Kittgliedern bestehen.

Zum Zwecke einer Fokussierung eines durch das Zielfernrohr 105 betrachteten Objekts 17 oder zur Anpassung an die Fehlsichtigkeit des Benutzers kann entweder das Okular 3 axial verschoben werden, oder eine Linse oder Linsengruppe, die Bestandteil des Objektivs 4 ist, kann axial verschoben werden. Diese Linse oder Linsengruppe ist in der Regel zwischen Objektiv 4 und Linsenumkehrsystem 108 angeordnet und kann Fokussierlinse 19 genannt werden.

Das Objektiv 4 kann ein reales, relativ zum betrachteten Objekt 17 auf dem Kopf stehendes Bild in einer zum Objekt 17 konjugierten ersten Bildebene 113 erzeugen. Die axiale Lage dieser Bildebene 113 ist abhängig von der Objektentfernung. Durch die Verwendung der Fokussierlinse kann die axiale Lage der Bildebene 113 beeinflusst werden.

Zum Zwecke der Bildaufrichtung kann das Linsenumkehrsystem 108 eine feststehende Linsengruppe enthalten, oder es kann mindestens zwei axial verschiebbare Zoomglieder enthalten. Durch das Linsenumkehrsystem 108 wird das auf dem Kopf stehende Bild wieder aufgerichtet und in einer neuen Bildebene, der zweiten Bildebene 114, mit einem bestimmten Abbildungsmaßstab abgebildet. Zwischen der ersten und der zweiten Bildebene können sich weitere Linsengruppen wie Feldlinse oder Barlowlinse befinden. Alle genannten optischen Elemente können Fassungen haben.

Nahe oder in der zu einem unendlich fernen Objekt 17 konjugierten ersten Bildebene 113 kann sich eine Feldblende 115 sowie ein Absehen 117 befinden. Üblich sind z.B. Glasabsehen oder Folienätzabsehen.

Wenn das Linsenumkehrsystem 108 wie im dargestellten Beispiel der Fig. 3 mindestens zwei axial verschiebbare Zoomglieder enthält, erfüllen diese neben der Aufgabe, das Bild in der ersten Bildebene umgekehrt in die zweite Bildebene abzubilden, eine weitere Funktion, nämlich die Gesamtvergrößerung des vom Benutzer wahrgenommenen Bildes in einem mechanisch begrenzten Bereich stufenlos wählbar zu machen. Das Linsenumkehrsystem 108 variiert dabei stufenlos seinen Abbildungsmaßstab zwischen der ersten Bildebene 113 und der der dazu konjugierten zweiten Bildebene 114.

Nahe oder in der zweiten Bildebene 114 kann sich wiederum eine Feldblende 116 sowie ein Absehen 118 befinden. Üblich sind z.B. Glasabsehen oder Folienätzabsehen.

Unter einem Punkt nahe der ersten oder zweiten Bildebene 113, beziehungsweise 114 wird dabei ein Ort verstanden, welcher entlang der optischen Achse um höchstens ein Fünftel, vorzugsweise höchstens ein Zehntel der Länge der Brennweite des jeweiligen auf die Bildebene fokussierenden optischen Teilsystems verschoben ist. Ist beispielsweise die Feldblende 115 gegenüber der Bildebene axial in Richtung auf das Objektiv 4 verschoben, so sollte diese Verschiebung kleiner als 1/5, vorzugsweise kleiner als 1/10 der Objektivbrennweite sein.

Durch das oder die Absehen 117, 118 wird eine Ziellinie definiert. Dazu weist das Absehen mindestens einen Zielpunkt auf, den der Benutzer in Übereinstimmung mit dem Objekt bringt. Zur Kompensation von Geschossabfall, Seitenwinden und ähnlichem kann der Benutzer mittels der Verstelltürme 109 die Ziellinie verändern. Um bei höher vergrößernden Zielfernrohren unabhängig von der Objektentfernung ein parallaxefreies Bild zu erhalten (d.h. dass sich bei seitlicher Bewegung des Auges 26 der Zielpunkt nicht gegenüber dem Objekt 17 verschiebt), das ebenso scharf ist wie das Absehen 117, 118, kann der Benutzer die Fokussierlinse verwenden.

Eine Zoomstellung steht umgangssprachlich für eine beliebige Vergrößerungseinstellung innerhalb des mechanisch möglichen Vergrößerungs-Verstellbereichs des Zielfernrohrs 105.

Ein Zoomfaktor ist das Verhältnis aus zwei Vergrößerungen, wobei die größere im Zähler steht. Ein maximaler Zoomfaktor ist das Verhältnis aus der mechanisch maximal möglichen und der mechanisch minimal möglichen Vergrößerung des Zielfernrohrs 105, wobei die größere im Zähler steht.

Das Okular 3 kann dazu benutzt werden, das Bild der zweiten Bildebene 114 in eine beliebige Entfernung, z.B. ins Unendliche oder in einem Meter scheinbare Entfernung, abzubilden, oder auf das Absehen 117, 118 scharfzustellen. Eine Strahlrichtung kann durch die Reihenfolge Objekt 17 - Objektiv 4 - Linsenumkehrsystem 108 - Okular 3 - Auge 26 definiert werden.

Die Fassungen der optischen Elemente oder die Sehfeldblende nahe der zweiten Bildebene 114 sind je nach Vergrößerungseinstellung begrenzend für das subjektiv wahrgenommene Sehfeld.

Tunneleffekt wird der Effekt genannt, der zu beobachten ist, wenn man von der mechanisch maximal möglichen Vergrößerung zur mechanisch minimal möglichen Vergrößerung zoomt und dabei die Sehfeldbegrenzung von der Sehfeldblende nahe der zweiten Bildebene 114 zu einer Fassung eines anderen optischen Elements oder einer Blende vor der zweiten Bildebene 114 wechselt, wodurch das subjektive Sehfeld abnimmt.

Eine Aperturblende kann entweder durch eine Fassung eines optischen Elements gebildet oder eine separate Aperturblende 120 definiert werden. Je nach Vergrößerungsstellung kann die Aperturblende auch durch eine andere Fassung eines optischen Elements sein. Sie kann durch das in Strahlrichtung nachfolgende restliche optische System in eine Ebene abgebildet werden, die in Strahlrichtung hinter dem Okular 3 liegt und typischerweise 70 bis 100 mm Abstand zu diesem hat. Diese Ebene kann Ebene der Austrittspupille genannt werden.

Derjenige Bereich hinter dem Okular 3, in dem sich das Auge 26 des Benutzers aufhalten muss, um das gesamte Sehfeld zu überblicken, wird Augenabstandsbereich (engl. Eyebox) genannt.

Eine Fehlsichtigkeit des Benutzers kann mittels eines Dioptrienausgleichs berücksichtigt werden. Dazu kann die axiale Position des Okulars 3 verändert werden.

Ein Zielfernrohr 105 kann darüber hinaus weitere optische Komponenten enthalten, die z.B. einer Absehenbeleuchtung, einer Strahlein- oder -auskopplung z.B. für eine Entfernungsmessung oder fotografischen Zwecken dienen. Ebenso können elektronische Komponenten, Sensoren, Bedienelemente oder Energiespeicher vorhanden sein, die für die genannten Zwecke nötig sind. Erfindungsgemäß werden nun mechanische Verstelleinrichtungen, wie zum Beispiel das oder die Drehelemente der Verstelltürme oder eine Absehen-Verstelleinrichtung genutzt, um die elektronischen Funktionen zu konfigurieren.

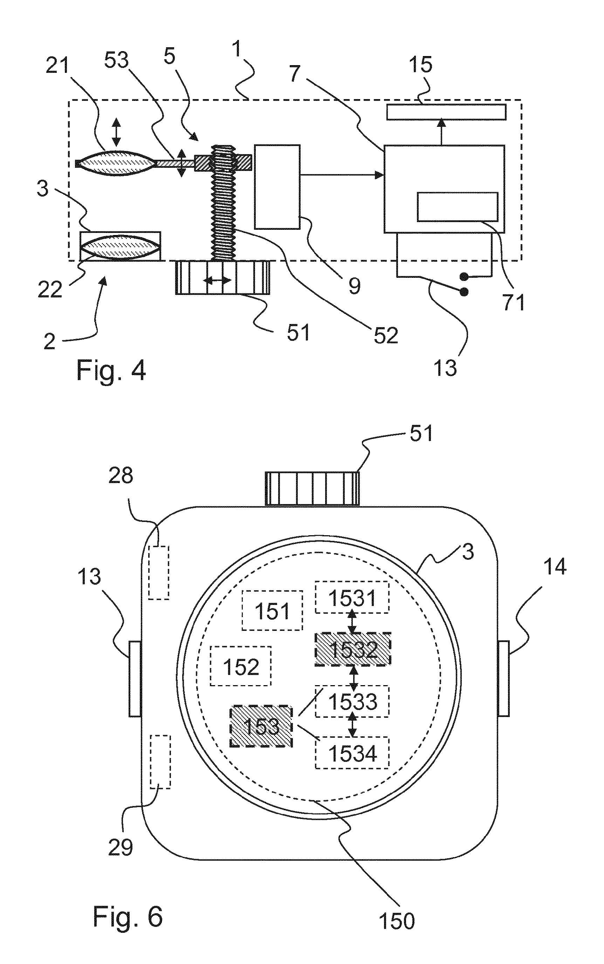

In Fig. 4 ist schematisch ein fernoptisches Gerät 1 mit den erfindungsgemäßen Komponenten dargestellt.

Das fernoptische Gerät 1 weist eine Optik 2 mit mehreren Linsen 21, 22 auf, mit welchem ein Bild durch ein Okular 3 betrachtbar ist.

Um beispielsweise die Optik 2 auf einen bestimmten Objektabstand zu fokussieren, weist das fernoptische Gerät 1 zumindest eine handbetätigbare Verstelleinrichtung 5 zur Einstellung der Optik 2 auf, mit welcher zumindest ein optisches Element verstellbar ist. Bei dem in Fig. 4 gezeigten Beispiel ist dies die Linse 21.

Die Kopplung der Verstelleinrichtung 5 mit dem optischen Element, also im Beispiel hier der Linse 21 ist mechanisch. Im Speziellen umfasst bei dem gezeigten Beispiel die handbetätigbare Verstelleinrichtung 5 einen handbetätigbaren Drehkopf oder ein handbetätigbares Verstellrad 51 mit einem Gewindestab 52. Auf dem Gewindestab läuft als weiterer Bestandteil der Verstelleinrichtung 5 ein Übertragungsarm 53, der mit einem zum Gewindestab 52 korrespondierenden Gewinde versehen ist, so das durch die Drehung des Verstellrads 51 der Übertragungsarm in axialer Richtung des Gewindestabs 52 bewegt wird. An dem Übertragungsarm 53 ist die Linse 21 befestigt, welche entsprechend dem Übertragungsarm 53 ebenfalls durch die Drehung des Verstellrads 51 in axialer Richtung des Verstellrads 51 und des Gewindestabs 52 bewegbar ist.

Das fernoptische Gerät 1 umfasst eine Elektronikeinheit 7 mit einem Speicher 71. Im Speicher 71 sind verschiedene Parameter der von der Elektronikeinheit 7 auszuführenden elektronischen Funktionen, beispielsweise von Steuerungs- oder Berechnungsfuntionen abgespeichert. Die Elektronikeinheit 7 ist demgemäß dazu eingerichtet, eine oder mehrere elektronische Funktionen in Abhängigkeit zumindest eines im Speicher 71 abgespeicherten Einstellungsparameters auszuführen.

Weiterhin ist eine elektrische Positionserfassungseinrichtung 9 vorgesehen, die mit der Verstelleinrichtung 5 gekoppelt ist, so dass eine Betätigung der Verstelleinrichtung 5 ein elektrisches Signal abhängig von der Stellung der Verstelleinrichtung 5 generiert. Abhängig vom elektrischen Signal wird dann ein Einstellungsparameter im Speicher 71 gespeichert. Die elektronische Funktion, welche auf diesen Einstellungsparameter zugreift, wird demgemäß durch die Betätigung der Verstelleinrichtung 5 geändert, wobei das Ändern der Funktion auch eine Aktivierung oder Deaktivierung umfassen kann. Die elektronische Funktion wird daher, ohne Beschränkung auf das Ausführungsbeispiel dauerhaft bis zum nächsten Abspeichern des Einstellungsparameters geändert, aktiviert oder deaktiviert. Die Änderung der Einstellungsparameter und damit auch der elektronischen Funktion geschieht nun erfindungsgemäß über die Betätigung der Verstelleinrichtung 5, mit der gleichzeitig das optische Element, im Beispiel also die Linse 21 bewegt wird.

Es ist im Allgemeinen nicht zweckmäßig, wenn die Einstellung des Einstellungsparameters ständig aktiviert ist, da die Verstelleinrichtung 5 während der üblichen Bedienung häufig betätigt wird.

Daher ist vorgesehen, dass die Elektronikeinheit 7 dazu eingerichtet ist, unter Ansprechen auf ein elektrisches Aktivierungssignal in einen Einstellmodus zu schalten, wobei in diesem Einstellmodus die Elektronikeinheit 7 dahingehend aktiviert ist, ein elektrisches Signal der Positionserfassungseinrichtung 9 zu erfassen.

Bei dem in Fig. 4 schematisch dargestellten fernoptischen Gerät 1 ist dazu ein handbetätigbarer Schalter 13 vorgesehen, mit welchem das elektrische Signal erzeugbar ist. Wird der Schalter 13 betätigt, schaltet die Elektronikeinheit 7 in den Einstellmodus. Dies kann auch zeitgesteuert erfolgen, indem etwa der Schalter 13 zur Aktivierung des Einstellmodus für eine gewisse Zeit gedrückt werden muss.

Wird nun die Verstelleinrichtung 5 betätigt, im dargestellten Beispiel durch Drehen des Verstellrades 51, ändert sich je nach Position, also im Beispiel je nach der Drehstellung des Verstellrades 51 der Einstellungsparameter der elektronischen Funktion. Um dem Bediener über den aktuellen Wert des Einstellungsparameters eine Rückmeldung zu geben, ist eine optische und/oder akustische Signalisierungseinrichtung 15 an die Elektronikeinheit 7 angeschlossen. Diese signalisiert dem Bediener eine Änderung der elektronischen Einstellungen, beziehungsweise des Einstellungsparameters. Hat der Bediener nun den gewünschten Einstellungsparameter durch Betätigung der Verstelleinrichtung 5 und Rückmeldung über die Signalisierungseinrichtung 15 eingestellt, kann der Einstellungsparameter nachfolgend im Speicher 71 abgespeichert werden.

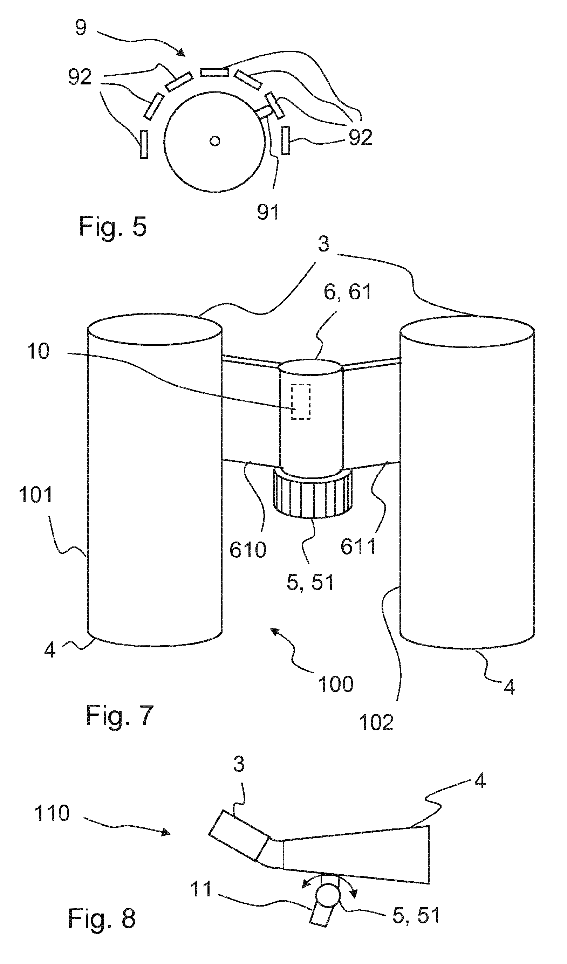

Die Positionserfassungseinrichtung 9 kann insbesondere ein Sensor sein, welcher die Stellung eines beweglichen Teils der Verstelleinrichtung 5 erfasst und in ein elektrisches Signal umsetzt. Beispielsweise kann ein magnetischer Sensor mit einer Messung der durch die Position eines Teils der Verstelleinrichtung 5 beeinflussten Induktivität vorgesehen werden. So kann die Induktivität einer Spule des Sensors durch die Position des Übertragungsarms 53 geändert werden. In ähnlicher Weise kann auch eine kapazitive Messung der Position des Übertragungsarms 53 durch den Sensor erfolgen. Gemäß noch einer in Fig. 5 dargestellten Ausführungsform kann die Positionserfassungseinrichtung 9 als Schalter mit mehreren Kontaktflächen 92 ausgebildet sein. An der Verstelleinrichtung 5, beispielsweise am Verstellrad 51 kann dann ein Schleifer oder Schleifkontakt 91 vorgesehen sein, mit welchem positionsabhängig ein elektrischer Kontakt zu einer der Kontaktflächen 92 hergestellt wird. Jeder geschlossenen Schalterstellung des so gebildeten Mehrfachschalters kann so von der Elektronikeinheit 7 ein bestimmter Wert des Einstellungsparameters zugeordnet werden.

Die Signalisierungseinrichtung 15 kann insbesondere eine optische Anzeige 150 sein. Gemäß einer vorteilhaften Weiterbildung der Erfindung ist diese optische Anzeige 150 durch zumindest einen Strahlengang des fernoptischen Geräts 1 hindurch sichtbar. Der Bediener kann so beim Durchblick durch das/eines der Okular(e) die Anzeige betrachten.

Gemäß einer alternativen oder zusätzlichen Ausführungsform kann eine Anzeige auch außerhalb des Strahlenganges des Gerätes angeordnet sein, beispielweise in Form einer in das Gehäuse integrierten oder am Gehäuse angeordneten Anzeige.

Fig. 6 zeigt schematisch ein fernoptisches Gerät 1 in Aufsicht auf das Okular 3 mit der durch das Okular 3 sichtbaren optischen Anzeige 150. Vorzugsweise ist die Anzeige 150 so ausgebildet, dass der Bediener des Geräts gleichzeitig auch das über das Objektiv abgebildete Bild sieht. Beispielsweise kann die optische Anzeige 150 dazu mit einem Strahlteiler eingeblendet werden. Die Anzeige 150 selbst befindet sich damit selbst nicht im Strahlengang.

Mit der Erfindung lassen sich ohne eine Vielzahl von zusätzlichen Schaltern auch mehrere oder komplexere Einstellungen der Elektronik vornehmen, wie anhand des Beispiels der Fig. 6 verdeutlicht wird.

Betätigt der Bediener den Schalter 13, so schaltet hier die Elektronikeinheit 7 durch das elektrische Signal des Schalters 13 in einen Auswahlmodus. In diesem Auswahlmodus zeigt die Anzeige 150 mehrere Menüpunkte 151, 152, 153, die durch das Okular 3 für den Bediener sichtbar sind. Zu jedem dieser Menüpunkte 151, 152, 153 kann ein Einstellungsparameter einer elektronischen Funktion ausgewählt werden, oder der Menüpunkt enthält ein Untermenü mit auswählbaren Einstellungsparametern. Gemäß einer Ausführungsform der Erfindung ist die Elektronikeinheit 7 nun dazu eingerichtet, unter Ansprechen auf ein oder mehrere weitere elektrische Aktivierungssignale in Kombination mit einem oder mehreren elektrischen Signalen der Positionserfassungseinrichtung 9 Parameter verschiedener elektronischer Funktionen abzuspeichern.

Wie bei der Ausführungsform gemäß Fig. 4 ist hier das Verstellrad 51 Bestandteil der handbetätigbaren Verstelleinrichtung 5, die mit der Positionserfassungseinrichtung 9 gekoppelt ist.

Die vorstehend genannten Aktivierungssignale dienen dazu, zwischen den einzelnen Menüpunkten 151, 152, 153 zu wechseln. Diese Aktivierungssignale können durch Betätigung des Schalters 13 und/oder durch Betätigung des Verstellrads und damit von der Positionserfassungseinrichtung 9 erzeugt werden. Anders als in Fig. 6 dargestellt, können die Menüpunkte 151, 152, 153 bei sukzessiver Betätigung des Verstellrads 51 und/oder des Schalters 13 auch nacheinander in der Anzeige 150 eingeblendet werden.

Als Beispiel sei ein Binokular 100 oder ein Zielfernrohr 105, etwa wie anhand der Fig. 1 bis 3 beschrieben, genannt, welches mit einem Entfernungsmesser und einem Ballistik-Informationssystem ausgestattet ist. Im Menüpunkt 152 wird beispielsweise die Auswahl der Entfernungsangabe wahlweise in Meter, Yard oder Fuß bereitgestellt. Der in Fig. 6 gerade ausgewählte Menüpunkt 153 ermöglicht die Auswahl verschiedener Ballistikkurven für das Ballistik-Informationssystem. Die Ballistikkurven können durch Anwahl der Einstellungsparameter-Auswahlfelder 1531, 1532, 1533, 1534 ausgewählt und im Speicher 71 abgespeichert werden. Das Auswählen geschieht durch Betätigen der Verstelleinrichtung 5 über das Verstellrad 51 oder beim Zielfernrohr über ein Drehelement 111 an einem der Verstelltürme 109, wie beispielhaft in Fig. 2 und Fig. 3 dargestellt. Bei dem in Fig. 6 gezeigten Beispiel ist dabei momentan die dem Einstellungsparameter-Auswahlfeld 1532 zugeordnete Ballistikkurve ausgewählt. Ein bestimmter Einstellungsparameter, nämlich hier die Ballistikkurve gemäß Auswahlfeld 1532 wird also wie oben gesagt durch eine Kombination ein oder mehrerer weiterer elektrische Aktivierungssignale, hier zur Auswahl eines der Menüpunkte 151, 152, 153, in Kombination mit einem oder mehreren elektrischen Signalen der Positionserfassungseinrichtung 9 zur Auswahl der Einstellungsparameter-Auswahlfelder 1531 - 1534 eingestellt.

Um den ausgewählten Einstellungsparameter abzuspeichern, kann durch Betätigung des handbetätigbaren Schalters 13 die Einstellung des Einstellungsparameters bestätigt werden. Für die Bestätigung kann zusätzlich zum für die Aktivierung vorgesehenen Schalter 13 auch ein separater Schalter 14 vorgesehen sein. Durch Bestätigen der Auswahl je nach Ausführungsform mit Schalter 13 oder einem zusätzlichen Schalter 14 wird der Einstellungsparameter für die zugeordnete Ballistikkurve dann in den Speicher 71 geschrieben und/oder der Menüpunkt verlassen. Alternativ oder zusätzlich kann auch ein Lagesensor 28 und/oder ein Bewegungssensor 29, insbesondere ein Beschleunigungssensor vorgesehen sein, um die Menüpunkte anzuwählen. So kann der in Fig. 6 beispielhaft von der optischen Anzeige 150 dargestellte Menübaum oder die Anordnung der Menüpunkte 151, 152, 153 und Auswahlfelder 1531 - 1534 dann durch Bewegen oder Lageänderung des fernoptischen Gerätes in einfacher und sehr ergonomischer Weise abgewandert werden. Soll beispielsweise vom Auswahlfeld 1513 zum in der Baumstruktur weiter unten angeordneten Auswahlfeld 1532 gewechselt werden, kann dazu als Beispiel das fernoptische Gerät nach unten geschwenkt werden. Diese Lageänderung oder Bewegung wird vom Lagessensor 28 und/oder Bewegungssensor 29 erfasst und von der Elektronikeinheit ausgewertet, so dass diese mit einer entsprechenden Änderung der Auswahl des Auswahlfelds anspricht und dies an die optische Anzeige 150 weitergibt. Eine solche Menüführung kann auch vorgesehen sein, ohne dass eine Einstellung eines Einstellparameters mittels einer handbetätigbaren Verstelleinrichtung 5, wie etwa einem Verstellrad 51 erfolgen muss. Diese Ausführungsform kann daher auch in einem fernoptischen Gerät 1 mit elektronischen Funktionen implementiert sein, bei dem keine elektronische Funktion mit einer mit einem optischen Element mechanisch gekoppelten handbetätigbaren Verstelleinrichtung 5 einstellbar ist.

Die Bestätigung der Auswahl eines Auswahlfelds 1531 - 1534 kann ebenfalls über eine geeignete Bewegung und Rückmeldung über einen der Sensoren 28, 29 erfolgen. Bevorzugt wird jedoch eine Bestätigung mittels eines der handbetätigbaren Schalter 13, 14. Demgemäß ist die Elektronikeinheit 7 eingerichtet, die optische Anzeige 150 unter Ansprechen auf Signale des Lagesensors 28 und/oder Bewegungssensors 29 derart zu steuern, dass bei einer Lage- oder Bewegungsänderung eine Auswahl oder Aktivierung eines Auswahlfelds 1531 - 1534 eines von der optischen Anzeige 150 dargestellten Menüs geändert wird. Auch die Menüpunkte 151, 152, 153 stellen dabei Auswahlfelder im Sinne der Erfindung dar.

Mit dieser Ausführungsform der Erfindung können alternativ oder zusätzlich zur Einstellung eines Einstellungsparameters über eine handbetätigbare Verstelleinrichtung 5 derartige Einstellungsparameter ebenfalls durch Lage- oder Bewegungsänderungen eingestellt werden. So kann durch Schwenken, Neigen oder Drehen ein Einstellungsparameter auch in einfacher Weise stufenlos oder zumindest fein abgestuft eingestellt werden.

Bei den bisher anhand der Figuren dargestellten Ausführungsbeispielen wurde die Einstellung der elektronischen Funktionen unter Zuhilfenahme einer handbetätigbaren Verstelleinrichtung 5 vorgenommen. Oft sind an einem fernoptischen Gerät aber auch mehrere Verstelleinrichtungen vorhanden. Gemäß einer Weiterbildung der Erfindung können entsprechend auch zumindest zwei dieser Verstelleinrichtungen gleichzeitig zur Einstellung einer oder mehrerer verschiedener elektronischer Funktionen verwendet werden. Auf diese Weise können in einfacher Weise auch komplexere Einstellmöglichkeiten realisiert werden, ohne dass eine Vielzahl von zusätzlichen Schaltern oder anderen separat am Gerät vorzusehenden elektrischen Einstellelementen vorgesehen werden muss.

Fig. 7 zeigt dazu ein Beispiel der Ausführungsform der Erfindung in Form eines Binokulars 100, bei welchem eine zweite handbetätigbare Verstelleinrichtung 6 zur Einstellung der Optik des fernoptischen Geräts 1 vorhanden ist. Das Binokular 100 kann im Einzelnen insbesondere auch wie das in Fig. 1 dargestellte Binokular aufgebaut sein. Als erste Verstelleinrichtung 5 dient bei dem dargestellten Beispiel die über das Verstellrad 51 betätigbare Fokussierung des Binokulars 100. Wie bei dem in Fig. 4 gezeigten Beispiel kann als erste Positionserfassungseinrichtung 9 ein Sensor vorgesehen sein, welcher die Position eines Übertragungsarms erfasst und in ein elektrisches Signal umsetzt. Der Übertragungsarm kann beispielsweise mit einer Linse des Objektivs 4 einer oder beider Tuben 101, 102 gekoppelt sein. Als zweite handbetätigbare Verstelleinrichtung 6 kann beispielsweise eine Knickbrücke 61 verwendet werden. Mit der Knickbrücke 61 wird der Abstand der beiden Tuben 101, 102 verändert und damit auch der Abstand der in den beiden Tuben 101, 102 angeordneten Optiken zueinander eingestellt.

Mit der Knickbrücke 61 ist eine zweite elektrische Positionserfassungseinrichtung 10 derart gekoppelt, dass eine Betätigung der zweiten Verstelleinrichtung 6, also bei einer Veränderung des Winkels zwischen den beiden Armen 610, 611 der Knickbrücke 61 ein elektrisches Signal der zweiten elektrischen Positionserfassungseinrichtung 10 abhängig von der Stellung der zweiten Verstelleinrichtung 6 ausgelöst wird. Die Elektronikeinheit 7 speichert oder ändert nun einen Einstellungsparameter im Speicher 71 abhängig von den elektrischen Signalen beider Positionserfassungseinrichtungen 9, 10. Übertragen auf das in Fig. 6 gezeigte Beispiel kann etwa durch Betätigung der Knickbrücke 61 zwischen den Menüpunkten 151, 152, 153 gewechselt werden. Die Auswahl des Einstellungsparameters, also etwa einer Ballistikkurve gemäß den Einstellungsparameter-Auswahlfeldern 1531 - 1534 kann dann wieder durch Betätigung des Verstellrades 51 erfolgen. Auch hier kann eine Anzeige 150 vorgesehen sein, die durch das Okular sichtbar ist.

Bei den bisher gezeigten Beispielen wurde mit den jeweiligen Verstelleinrichtungen die Position der optischen Elemente relativ zueinander geändert. Auch bei der Knickbrücke 61 ist dies der Fall, da der Abstand der Tuben und damit auch der Abstand der Linsen vom ersten Tubus 101 zum zweiten Tubus 102 geändert werden. Gegebenenfalls sind aber auch Verstelleinrichtungen vorhanden, welche die Optik als Ganzes relativ zu einer Montageeinrichtung ändern. Beispielsweise kann eine Neigungseinstelleinrichtung vorgesehen sein, mit welcher das fernoptische Gerät 1 gegenüber dem Montagepunkt einer Montageeinrichtung geneigt werden kann.

Ein solches Beispiel in Form eines Spektivs 110 ist in Fig. 8 dargestellt. Das Spektiv 110 ist mit einer Montageeinrichtung 11 in Form eines Stativfußes ausgestattet. Mittels einer durch ein Verstellrad 51 betätigbaren Verstelleinrichtung kann die Neigung des montierten Spektivs 110 verändert werden. Auch eine solche handbetätigbare Verstelleinrichtung 5, welche die Optik als Ganzes bewegt, kann mit einer Positionserfassungseinrichtung 9 entsprechend dem in Fig. 4 gezeigten Beispiel ausgestattet werden und zur Änderung oder Einrichtung der Einstellungen elektronischer Funktionen des fernoptischen Geräts 1, beziehungsweise hier speziell dem Spektiv 110 verwendet werden.

Die Figuren sind auch bezüglich der dargestellten Verstelleinrichtungen nur beispielhaft. Selbstverständlich können auch andere Verstelleinrichtungen, welche mechanisch auf die Optik einwirken, wie eine Dioptrienverstellung, eine Parallaxenausgleich-Einrichtung, eine Absehen-Verstelleinrichtung, eine Höhen/Seitenturm-Einstellung, beziehungsweise Verstellturm-Einstelleinrichtung bei Zielfernrohren, eine Blendeneinstelleinrichtung oder eine Zoom-Einstelleinrichtung ebenso verwendet werden.

### Bezugszeichenliste

- 1: Fernoptisches Gerät
- 2: Optik
- 3: Okular
- 4: Objektiv
- 5: handbetätigbare Verstelleinrichtung
- 6: zweite handbetätigbare Verstelleinrichtung
- 7: Elektronikeinheit
- 9, 10: Positionserfassungseinrichtung
- 11: Montageeinrichtung
- 13, 14: handbetätigbarer Schalter
- 15: Signalisierungseinrichtung
- 17: Objekt
- 18: Prismensystem
- 19: Fokussierlinse
- 20: optische Achse
- 21, 22: Linsen
- 24: Zwischenbildebene
- 26: Auge
- 28: Lagesensor
- 29: Bewegungssensor
- 51: Verstellrad
- 52: Gewindestab
- 53: Übertragungsarm
- 61: Knickbrücke
- 71: Speicher
- 91: Schleifkontakt
- 92: Kontaktflächen
- 100: Binokular
- 101, 102: Tuben von 100
- 105: Zielfernrohr
- 106: Rohr
- 107: verstellbare optische Elemente
- 108: Linsenumkehrsystem
- 109: Verstellturm,
- 111: Drehelement
- 110: Spektiv
- 113: erste Bildebene
- 114: zweite Bildebene
- 115, 116: Feldblende
- 117, 118: Absehen
- 120: Aperturblende
- 150: optische Anzeige
- 151, 152, 153: Menüpunkte
- 610, 611: Arme von 61
- 1531, 1532, 1533, 1534,: Einstellungsparameter-Auswahlfelder

## Patentansprüche

1. Fernoptisches Gerät (1) mit einer Optik (2) mit mehreren Linsen (21, 22) und einem Okular (3), wobei das fernoptische Gerät (1) zumindest eine handbetätigbare Verstelleinrichtung (5) zur Einstellung der Optik (2) aufweist, mit welcher zumindest ein optisches Element der Optik (2) oder die Optik (2) gegenüber einer Montageeinrichtung (11) verstellbar ist,
wobei die Verstelleinrichtung (5) mit zumindest einem optischen Element oder der Montageeinrichtung (11) mechanisch gekoppelt ist, wobei das fernoptische Gerät (1) weiterhin eine Elektronikeinheit (7) mit einem Speicher (71) aufweist, wobei die Elektronikeinheit (7) dazu eingerichtet ist, eine elektronische Funktion in Abhängigkeit eines im Speicher (71) abgespeicherten Einstellungsparameters auszuführen, und wobei die Verstelleinrichtung (5) mit einer elektrischen Positionserfassungseinrichtung (9) gekoppelt ist, derart, dass eine Betätigung der Verstelleinrichtung (5) ein elektrisches Signal der elektrischen Positionserfassungseinrichtung (9) abhängig von der Stellung der Verstelleinrichtung (5) auslöst, und wobei die Elektronikeinheit (7) dazu eingerichtet ist, einen Einstellungsparameter im Speicher (71) abhängig vom elektrischen Signal der Positionserfassungseinrichtung (9) abzuspeichern oder zu ändern.

2. Fernoptische Einrichtung (1) gemäß dem vorstehenden Anspruch, **dadurch gekennzeichnet, dass** die handbetätigbare Verstelleinrichtung zumindest eine der folgenden Einrichtungen umfasst:
- ein Fokusrad,
- eine Dioptrienverstellung,
- eine Parallaxenausgleich-Einrichtung,
- eine Absehen-Verstelleinrichtung,
- eine Höhen/Seitenturm-Einstellung,
- eine Knickbrücke,
- eine Blendeneinstelleinrichtung
- eine Zoom-Einstelleinrichtung.

3. Fernoptisches Gerät (1) gemäß einem der vorstehenden Ansprüche, **dadurch gekennzeichnet, dass** die Elektronikeinheit (7) dazu eingerichtet ist, unter Ansprechen auf ein elektrisches Aktivierungssignal in einen Einstellmodus zu schalten, wobei in diesem Einstellmodus die Elektronikeinheit (7) dahingehend aktiviert ist, ein elektrisches Signal der Positionserfassungseinrichtung (9) zu erfassen.

4. Fernoptisches Gerät (1) gemäß dem vorstehenden Anspruch, **gekennzeichnet durch** einen handbetätigbaren Schalter (13), mit welchem das elektrische Signal erzeugbar ist.

5. Fernoptisches Gerät (1) gemäß einem der beiden vorstehenden Ansprüche, **dadurch gekennzeichnet, dass** die Elektronikeinheit (7) dazu eingerichtet ist, durch das elektrische Signal, vorzugsweise durch Betätigung eines oder mehrerer Schalter am fernoptischen Gerät (1) in einen Auswahlmodus zu schalten, wobei die Elektronikeinheit (7) weiterhin dazu eingerichtet ist, unter Ansprechen auf ein oder mehrere weitere elektrische Aktivierungssignale in Kombination mit einem oder mehreren elektrischen Signalen der Positionserfassungseinrichtung (9) Parameter verschiedener elektronischer Funktionen abzuspeichern.

6. Fernoptisches Gerät (1) gemäß einem der vorstehenden Ansprüche, **gekennzeichnet durch** einen handbetätigbaren Schalter (13, 14) mit welchem **durch** Betätigung die Einstellung des Einstellungsparameters bestätigbar ist.

7. Fernoptisches Gerät (1) gemäß einem der vorstehenden Ansprüche, **gekennzeichnet durch** eine optische oder akustische Signalisierungseinrichtung (15), welche an die Elektronikeinheit (7) angeschlossen ist oder einen Bestandteil der Elektronikeinheit (7) bildet, wobei die Elektronikeinheit (7) dazu ausgebildet ist, mittels der Signalisierungseinrichtung (15) eine Änderung des Einstellungsparameters zu signalisieren.

8. Fernoptisches Gerät (1) gemäß dem vorstehenden Anspruch, **dadurch gekennzeichnet, dass** die Signalisierungseinrichtung (15) eine optische Anzeige (150) umfasst, welche durch zumindest einen Strahlengang des fernoptischen Geräts (1) hindurch sichtbar ist.

9. Fernoptisches Gerät (1) gemäß einem der vorstehenden Ansprüche, **gekennzeichnet durch** eine zweite handbetätigbare Verstelleinrichtung (6) zur Einstellung der Optik des fernoptischen Geräts (1) wobei die zweite Verstelleinrichtung (6) mit einer zweiten elektrischen Positionserfassungseinrichtung (10) derart gekoppelt ist, dass eine Betätigung der zweiten Verstelleinrichtung (6) ein elektrisches Signal der zweiten elektrischen Positionserfassungseinrichtung (10) abhängig von der Stellung der zweiten Verstelleinrichtung (6) auslöst, und wobei die Elektronikeinheit (7) eingerichtet ist, einen Einstellungsparameter im Speicher (71) abhängig von den elektrischen Signalen beider Positionserfassungseinrichtungen (9, 10) abzuspeichern oder zu ändern.

10. Fernoptisches Gerät (1) gemäß einem der vorstehenden Ansprüche, **dadurch gekennzeichnet, dass** die Elektronikeinheit (7) dazu eingerichtet ist, zumindest einen der folgenden Einstellungsparameter unter Ansprechen auf eine Betätigung der Verstelleinrichtung (5) zu ändern:
- eine Defaulthelligkeit einer optischen Anzeige,
- eine maximale Helligkeit einer optischen Anzeige,
- eine minimale Helligkeit einer optischen Anzeige,
- Helligkeitsstufen einer optischen Anzeige,
- eine Umschaltung von Einheiten, vorzugsweise Entfernungseinheiten, vorzugsweise von Meter in Fuß oder Yards, oder von Winkeleinheiten, ,
- eine Einstellung oder Auswahl einer Ballistikkurve,
- eine Zeitangabe,
- Funkübertragungseinstellungen, insbesondere Einstellungen zur Funkübertragung und/oder zum Funkempfang von Daten.

11. Fernoptisches Gerät (1) gemäß einem der vorstehenden Ansprüche, **dadurch gekennzeichnet, dass** die Positionserfassungseinrichtung zumindest eine der folgenden Einrichtungen umfasst:
- einen Schalter,
- einen Schleifkontaktschalter, insbesondere mit mehreren Schaltkontaktflächen,
- einen optischen Sensor,
- einen magnetischen Sensor,
- einen kapazitiven Sensor.

12. Fernoptisches Gerät (1) gemäß einem der vorstehenden Ansprüche, wobei das fernoptische Gerät eine von der Elektronikeinheit (7) gesteuerte optische Anzeige umfasst, welche durch zumindest einen Strahlengang des fernoptischen Geräts (1) hindurch sichtbar ist, und wobei zumindest ein Lagesensor (28) oder Bewegungssensor (29) vorgesehen sind, wobei die Elektronikeinheit (7) eingerichtet ist, die optische Anzeige (150) unter Ansprechen auf Signale des Lagesensors (28) oder Bewegungssensors (29) derart zu steuern, dass bei einer Lage- oder Bewegungsänderung eine Auswahl oder Aktivierung eines Auswahlfelds (1531 - 1534) eines von der optischen Anzeige (150) dargestellten Menüs geändert wird.
